(19)

**Europäisches Patentamt**
**European Patent Office**
**Office européen des brevets**

(11) **EP 4 717 876 A1**

(12) **EUROPEAN PATENT APPLICATION**

(43) Date of publication:
01.04.2026 Bulletin 2026/14

(21) Application number: 25204494.6

(22) Date of filing: 25.09.2025

(51) International Patent Classification (IPC):
*E21B 47/022* (2012.01)

(52) Cooperative Patent Classification (CPC):
**E21B 47/022;** E21B 2200/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 26.09.2024 US 202463699199 P

(71) Applicants:
• **Services Pétroliers Schlumberger
75007 Paris (FR)**
Designated Contracting States:
**FR**
• **Schlumberger Technology B.V.
2514 JG The Hague (NL)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **SIZOVA, Sofya
92140 Clamart (FR)**
• **KATAYAMA, Makito
92140 Clamart (FR)**
• **CROUX, Arnaud
92140 Clamart (FR)**
• **KULIEV, Almaz
Stonehouse, GL10 3SX (GB)**
• **KUDRYAVTSEV, Aleksey
92140 Clamart (FR)**
• **GORICHKA, Marian
Stonehouse, GL10 3SX (GB)**

(74) Representative: **Schlumberger Intellectual
Property Department
Parkstraat 83
2514 JG Den Haag (NL)**

(54) **DOWNHOLE HEALTH MONITORING OF SURVEY SENSORS**

(57) A method for surveying a wellbore includes rotating a wellbore surveying tool in a wellbore. The wellbore surveying tool includes a plurality of magnetometers, a plurality of accelerometers, and, optionally, a plurality of temperature sensors. Sensor measurements are made while the survey tool rotates in the wellbore. A failed accelerometer or a failed temperature sensor is automatically detected from the accelerometer measurements or the temperature measurements. Corrected sensor measurements are computed for the failed sensor from selected ones of the magnetometer measurements, the accelerometer measurements, and the temperature measurements and used to further compute at least one of a wellbore inclination or a wellbore azimuth.

EP 4 717 876 A1

**Description**

**CROSS REFERENCE TO RELATED APPLICATIONS**

This application claims priority to U.S. Provisional Patent Application No. 63/699,199, which was filed on September 26, 2024, and is incorporated herein by reference in its entirety.

**FIELD**

Disclosed embodiments relate generally to wellbore surveying methods and more particularly to downhole health monitoring of survey sensors.

**BACKGROUND**

In conventional drilling and measurement while drilling (MWD) operations, wellbore inclination and wellbore azimuth are measured during the drilling operation. Static measurements may be made at a discrete number of longitudinal points along the axis of the wellbore when drilling has temporarily stopped and the drill string is lifted off the bottom of the wellbore. More recently, methods have been developed to make continuous (or real time) measurements while drilling (e.g. while rotating the drill string in the wellbore). Such continuous measurements are sometimes referred to as definitive dynamic surveys (DDS). In both static and continuous measurements, the wellbore inclination and wellbore azimuth may be computed from triaxial accelerometer measurements of the earth's gravitational field and triaxial magnetometer measurements of the earth's magnetic field.

Owing to the severe stresses inherent in the downhole drilling process, such as continuous exposure to shock, vibration, and high temperatures, the electronics deployed in downhole measurement tools, particularly accelerometers, are subject to degradation or even to sudden failure. Detecting such degradation or failures can be challenging during a drilling operation. Moreover, when degradation or failure is suspected, current trouble-shooting procedures are highly time intensive, requiring expert personnel and stopping drilling to complete a roll test. Such procedures can result in a long period of non-productive time and increased expense. Still further, sensor degradation or failure can hinder subsequent survey measurements.

There is a need in the industry for methods for automated sensor failure detection and sensor failure correction in measurement while drilling (MWD) tools.

**SUMMARY**

In one example embodiment, a wellbore surveying operation comprises surveying a wellbore; automatically detecting a failed survey sensor while surveying; computing corrected sensor measurements for the failed survey sensor from other surveying sensors; and completing the surveying with the corrected sensor measurements (e.g., computing at least one surveying parameter such as wellbore inclination, wellbore azimuth, or dip angle).

This summary is provided to introduce a selection of concepts that are further described below in the detailed description. This summary is not intended to identify key or essential features of the claimed subject matter, nor is it intended to be used as an aid in limiting the scope of the claimed subject matter.

**BRIEF DESCRIPTION OF THE DRAWINGS**

For a more complete understanding of the disclosed subject matter, and advantages thereof, reference is now made to the following descriptions taken in conjunction with the accompanying drawings, in which:

FIG. 1 depicts a drilling rig including a disclosed wellbore surveying tool'
FIG. 2 depicts the wellbore surveying tool shown on FIG. 1.
FIG. 3 depicts a flow chart of one example method for diagnosing and correcting a navigational sensor failure.
FIG. 4 depicts a flow chart of another example method for diagnosing and correcting a navigational sensor failure.
FIG. 5 depicts a flow chart of one example method for detecting an accelerometer failure.
FIG. 6 depicts example sensor correction blocks for x-, y-, and z-axis accelerometer correction.

**DETAILED DESCRIPTION**

Systems and methods for surveying a subterranean wellbore while drilling are disclosed. In one example embodiment a disclosed method includes rotating a wellbore surveying tool in a wellbore. The wellbore surveying tool includes a plurality of magnetometers, a plurality of accelerometers, and, optionally, a plurality of temperature sensors. Sensor measurements are made while the survey tool rotates in the wellbore. A failed accelerometer or a failed temperature sensor is automatically detected from the accelerometer measurements or the temperature measurements. Corrected sensor measurements are computed for the failed sensor from selected ones of the magnetometer measurements, the accelerometer measurements, and the temperature measurements and used to further compute at least one of a wellbore inclination or a wellbore azimuth.

Example embodiments disclosed herein may provide various technical advantages and improvements over the prior art. For example, the disclosed embodiments may enable wellbore surveying measurements to be made even when there is a failure of one of the triaxial accelerometers or temperature sensor deployed in the survey tool. The disclosed embodiments may therefore provide improved reliability and operational flexibility in the event of a sensor failure.

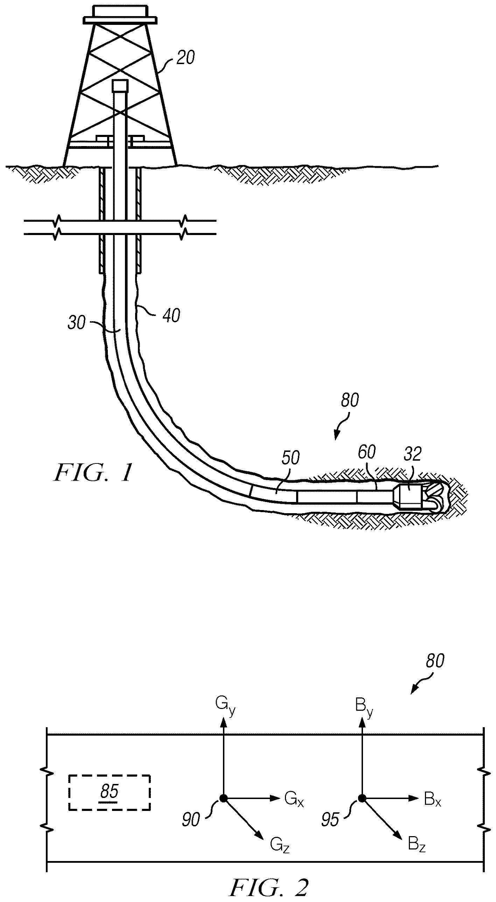

FIG. 1 depicts a drilling rig 20 including a disclosed survey tool 80 deployed in the string 30 and disposed within a wellbore 40. The drilling rig 20 may be deployed onshore or offshore (an onshore application is depicted). As is known to those of ordinary skill, offshore rigs commonly include a platform deployed atop a riser that extends from the sea floor to the surface. The drill string extends downward from the platform, through the riser, and into the wellbore through a blowout preventer (BOP) located on the sea floor. The disclosed embodiments are not limited in these regards. In both onshore and offshore operations, the wellbore 40 may be drilled in the subterranean formations via rotary drilling, slide drilling, or power drilling in a manner that is well-known to those of ordinary skill in the art (e.g., via well-known directional drilling techniques).

In the depicted embodiment, the drilling rig 20 is positioned over a subterranean formation and may include a derrick and a hoisting apparatus (not shown) for raising and lowering a drill string 30, which, as shown, extends into wellbore 40 and includes a drill bit 32 and the surveying tool 80, which may include, for example, a measurement while drilling (MWD) tool 50 or a rotary steerable system (RSS) 60. As is known to those of ordinary skill in the art, the drill string 30 may further include other tools such as a downhole drilling motor, a downhole telemetry system (e.g., deployed in or adjacent to MWD tool 50), and one or more logging while drilling (LWD) tools including various sensors for measuring one or more properties of the formation through which the wellbore penetrates, for example, including resistivity, NMR relaxation times, density, porosity, sonic velocity, gamma ray counts, and the like. Moreover, the MWD tool 50 may be configured to measure one or more properties of the wellbore 40 as it is drilled or at any time thereafter. The physical properties may include, for example, pressure, temperature, wellbore caliper, wellbore trajectory (attitude), a toolface angle, and the like.

It will be understood by those of ordinary skill in the art that the deployment illustrated on FIG. 1 is merely an example and that the disclosed embodiments are expressly not limited in regards to the bottom hole assembly (BHA) configuration. Nor are they limited to any particular type of drilling operation. Moreover, it will be understood that wellbore surveying measurements (inclination and azimuth measurements) are commonly made in one or both of MWD tool 50 and RSS tool 60. While the disclosed embodiments are described in more detail below with respect to downhole survey measurements, it will be appreciated that such measurements may be MWD and/or RSS measurements.

FIG. 2 depicts one example embodiment of survey tool 80. Survey tool 80 may include substantially any suitable downhole tool or tool sub configured to make wellbore surveying measurements, for example, including an MWD tool and/or an RSS as described above. MWD tools are commonly deployed at an upper end of the bottom hole assembly (BHA) and are generally configured to rotate with the drill string. While the disclosed embodiments are not limited in this regard, MWD tools commonly further include a mud pulse telemetry transmitter or another telemetry system and an alternator for generating electrical power. An RSS is commonly deployed in the lower BHA and connected with the drill bit 32. RSSs generally includes steering elements that may be actuated to control and/or change the direction of drilling the wellbore 40. In embodiments employing an RSS, substantially any system configuration may be used. For example, the PowerDrive rotary steerable systems (available from SLB) fully rotate with the drill string (i.e., the outer housing rotates with the drill string). The PowerDrive Xceed makes use of an internal steering mechanism that does not require contact with the wellbore wall and enables the tool body to fully rotate with the drill string. The PowerDrive X5, X6, and Orbit rotary steerable systems make use of mud actuated blades (or pads) that contact the wellbore wall. The extension of the blades (or pads) is rapidly and continually adjusted as the system rotates in the wellbore. The disclosed embodiments are not limited to any particular RSS configuration.

Survey tool 80 further includes survey sensors including accelerometer and magnetometer sets 90 and 95 that may be deployed to rotate with the drill string or may be deployed in a roll stabilized housing that may be slowly rotated from time to time. The depicted sensor sets may include triaxial accelerometer and triaxial magnetometer navigation sensor sets, which could be any suitable commercially available devices. Suitable accelerometers for use in sensor set 90 may be chosen, for example, from among substantially any suitable commercially available devices known in the art. Suitable accelerometers may alternatively include microelectro-mechanical systems (MEMS) solid-state accelerometers, which tend to be shock resistant, high temperature rated, and inexpensive. Suitable magnetic field sensors for use in sensor set 95 may include conventional ring core flux gate magnetometers or conventional magnetoresistive sensors.

FIG. 2 further includes a diagrammatic representation of the triaxial accelerometer set 90 and the triaxial magnetometer 95. By triaxial it is meant that each sensor set includes three mutually perpendicular sensors, the accelerometers being designated as $G_x$, $G_y$, and $G_z$ and the magnetometers being designated as $B_x$, $B_y$, and $B_z$. By convention, a right-handed system is designated in which the x-axis accelerometer and magnetometer ($G_x$ and $B_x$) are oriented substantially parallel with the tool axis (and therefore the wellbore axis) as indicated. Each of the accelerometer and magnetometer sets may therefore be considered as determining a plane (the y-and z-axes) and a pole (the x-axis along the axis of the BHA). It will be appreciated that the disclosed embodiments are not limited to any particular coordinate convention and that another common convention used in the industry designates the tool axis as the z-axis.

By further nonlimiting convention, the gravitational field is taken to be positive pointing downward (i.e., toward the center of the earth) while the magnetic field is taken to be positive pointing towards magnetic north. Moreover, also by nonlimiting convention, the y-axis is taken to be the toolface reference axis (i.e., such that the gravity toolface $GTF$ equals zero when the y-axis is uppermost and the magnetic toolface $MTF$ equals zero when the y-axis is pointing towards the projection of magnetic north in the $yz$ plane). The magnetic toolface $MTF$ is projected in the yz plane and may be represented mathematically as the angle between the projections of the horizontal projection of the earth's magnetic field $B_h$ on the y- and z-axes: $\tan(MTF) = -B_{hz}/B_{hy}$. Likewise, the gravity toolface $GTF$ may be represented mathematically as: $\tan(GTF) = G_z/-G_y$. The negative sign in the gravity toolface expression arise owing to the nonlimiting convention that the gravity vector is positive in the downward direction while the toolface angle $GTF$ is positive on the high side of the wellbore (the side facing upward).

It will be appreciated that the disclosed embodiments are, of course, not limited to the above-described conventions for defining wellbore coordinates. These conventions can affect the form of certain of the mathematical equations that follow in this disclosure. Those of ordinary skill in the art will be readily able to utilize other conventions and derive equivalent mathematical equations.

As also noted above, the disclosed embodiments are not limited to MWD deployments but may also include RSS deployments. Those of ordinary skill will readily recognize that RSS tools include steering elements that may be actuated to control and/or change the direction of drilling the wellbore 40. In embodiments employing a rotary steerable tool, substantially any suitable rotary steerable tool configuration may be used. Various rotary steerable tool configurations are known in the art. For example, some rotary steerable systems include a substantially non-rotating (or slowly rotating) outer housing employing blades that engage the wellbore wall. Engagement of the blades with the wellbore wall is intended to eccenter the tool body, thereby pointing or pushing the drill bit in a desired direction while drilling. A rotating shaft deployed in the outer housing transfers rotary power and axial weight-on-bit to the drill bit during drilling. Accelerometer and magnetometer sets may be deployed in the outer housing and therefore are non-rotating or rotate slowly with respect to the wellbore wall.

The PowerDrive rotary steerable systems (available from SLB) fully rotate with the drill string (i.e., the outer housing rotates with the drill string). The PowerDrive Xceed makes use of an internal steering mechanism that does not require contact with the wellbore wall and enables the tool body to fully rotate with the drill string. The PowerDrive X5, X6, and Orbit rotary steerable systems make use of mud actuated blades (or pads) that contact the wellbore wall. The extension of the blades (or pads) is rapidly and continually adjusted as the system rotates in the wellbore. Moreover, it will be appreciated that the RSS may include a steerable drill bit, such as the NeoSteer at bit steerable system available from SLB, in which the steering pads extend outward from the drill bit body into contact with the wellbore wall.

The PowerDrive Archer makes use of a lower steering section joined at a swivel with an upper section. The swivel is actively tilted via pistons so as to change the angle of the lower section with respect to the upper section and maintain a desired drilling direction as the bottom hole assembly rotates in the wellbore. Accelerometer and magnetometer sets may rotate with the drill string or may alternatively be deployed in an internal roll-stabilized housing such that they remain substantially stationary (in a bias phase) or rotate slowly with respect to the wellbore (in a neutral phase).

With reference again to FIG. 2, the accelerometer and magnetometer sets 90, 95 may be configured for making downhole navigational (surveying) measurements during a drilling operation. Such measurements are well known and commonly used to determine, for example, wellbore inclination, wellbore azimuth, gravity toolface, magnetic toolface, and dipping angle (dip). The accelerometers and magnetometers may be electrically coupled to a digital signal processor (or other digital controller) through corresponding analog signal conditioning circuits. The signal conditioning circuits may include low-pass filter elements that are intended to bandlimit sensor noise and therefore tend to improve sensor resolution and surveying accuracy.

Recently, methods have been developed to make continuous (or real time) measurements while drilling. For example, commonly assigned US. Patent 11,692,432 discloses a surveying methodology in which the accelerometer measurements and magnetometer measurements are synchronized, for example, to compensate for temperature drift, phase shift and attenuation of the measurements, and/or distortion caused by magnetic interference. The corrected/-synchronized measurements are then used to compute the desired wellbore survey parameters, such as wellbore inclination, wellbore azimuth, and/or dip angle. Advantageous embodiments disclosed herein may be employed with such continuous surveying measurements.

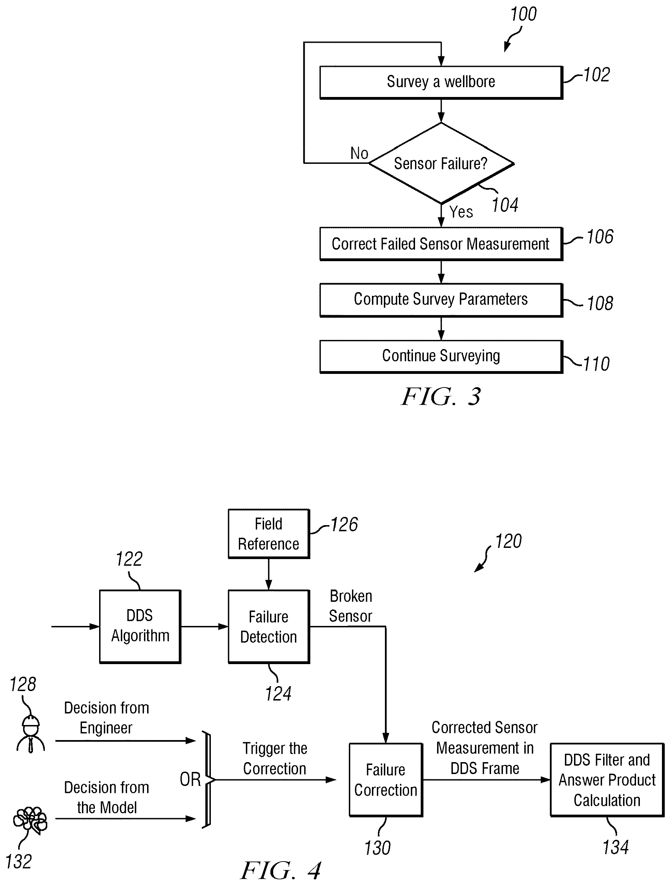

Survey tool 80 further includes an electronic controller 85. A suitable controller 85 may include, for example, a programmable processor, such as a digital signal processor or other microprocessor or microcontroller and processor-readable or computer-readable program code embodying logic. The controller may be utilized, for example, to automatically execute certain ones of the steps in the method embodiments described in more detail below with respect to FIGS. 3-6 and the accompanying equations. For example, the controller may be configured to cause the triaxial accelerometer set 90 and the triaxial magnetometer set 95 to make corresponding accelerometer and magnetometer measurements while the survey tool 80 rotates in the wellbore, to detect sensor degradation or a sensor failure, to correct the failed sensor measurements, and to compute wellbore survey parameters from the corrected sensor measurements.

A suitable controller 85 may also optionally include other controllable components, such as other sensors, data storage devices, power supplies, timers, and the like. The controller 85 is commonly disposed in electronic communication with the accelerometers 90 and magnetometers 95 and may also optionally communicate with other instruments in the drill string, such as, for example, telemetry systems that communicate with the surface. A suitable controller may further optionally include volatile or non-volatile memory or a data storage device.

FIG. 3 depicts a flow chart of one example method 100 for diagnosing and correcting a navigational sensor failure (e.g., an accelerometer failure or a temperature sensor failure). The disclosed method includes surveying a wellbore at 102 (e.g., making wellbore surveying measurements while rotating a surveying tool in the wellbore during a drilling operation). As described above, the measurements may be made, for example, by making triaxial accelerometer and magnetometer measurements using corresponding accelerometer and magnetometer sets deployed in a rotating MWD or RSS tool. A sensor failure detection algorithm may run concurrently with the wellbore surveying measurements at 104. When no sensor failures are detected, the drilling and surveying operation may continue as planned (e.g., at 102). In the event of a sensor failure, the failed sensor measurement may be corrected in real time during the surveying operation at 106. The corrected sensor measurements may then be used to compute the desired survey parameters (e.g., wellbore inclination, wellbore azimuth, dip angle, etc.) at 108. The surveying operation may then continue uninterrupted making use of corrected sensor measurements at 110.

FIG. 4 depicts a flow chart of another example method 120 for diagnosing and correcting a navigational sensor failure (e.g., an accelerometer failure or a temperature sensor failure). Method 120 is similar to method 100 in that wellbore surveying measurements are made at 122 while drilling (e.g., definitive dynamic surveys in the depicted example). A failure detection algorithm 124 runs concurrently with the wellbore surveying operation and makes use of computed survey parameters (made at 122) and a field reference at 126. As described in more detail below with respect to one example embodiment, the failure detection algorithm may compare total gravitational field and dip angle measurements made while surveying at 122 with corresponding field references at 126. The failure detection algorithm may be configured, for example, to detect one or more of an accelerometer failure (such as an x-, y-, or z-axis accelerometer failure) or a temperature sensor failure (such as a magnetometer temperature sensor failure, an x-, y-, or z-axis accelerometer temperature sensor, and/or an analog-to-digital controller (ADC) temperature sensor failure).

With continued reference to FIG. 4, detection of a sensor failure may trigger one or more of several actions. For example, a sensor failure alert may be transmitted up hole to a field engineer 128 who may in turn manually trigger a sensor correction algorithm 130. In another embodiment, a sensor failure may automatically trigger 132 the correction algorithm 130 (while concurrently sending an alert to the field engineer 128). The sensor correction algorithm 130 may be configured to correct the failed sensor measurements to obtain corrected sensor measurements, which may in turn be used to compute the desired wellbore surveying parameters at 134 (e.g., wellbore inclination, wellbore azimuth, magnetic dip angle, etc.).

It will be appreciated that while not depicted, computing the desired wellbore surveying parameters at 134 may further include compensating the triaxial accelerometer measurements and the triaxial magnetometer measurements. The compensation may be advantageously performed after the measurements (including the corrected accelerometer measurement when applicable) are digitized. The compensation may include, for example, removing first and second time lags introduced by corresponding accelerometer electronics and magnetometer electronics that are in communication with the accelerometers and magnetometers. The temperature measurements made at 122 (including the corrected accelerometer measurements when applicable) may be employed in removing the first and second time lags. The compensation may further include removing a time lag from cross axial magnetometer measurement that results from Eddy currents that are induced in the tool collar by rotation in the Earth's magnetic field. The Eddy current time lag may be estimated from known properties of the tool collar or may alternatively be measured by rotating the collar at different rates. Suitable compensation techniques are disclosed in commonly assigned U.S. Patents 11,692,432 and 12,123,297.

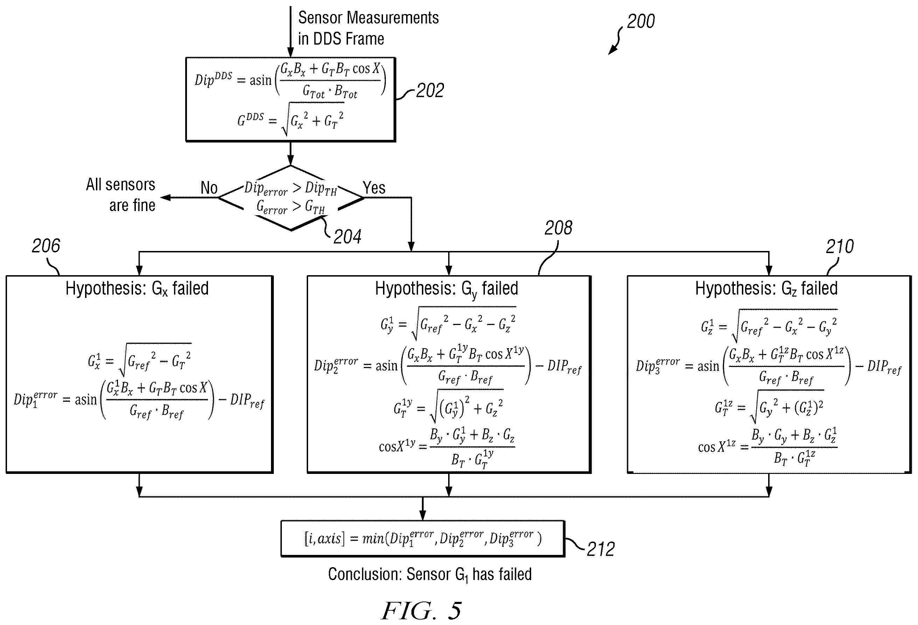

Turning now to FIG. 5, a flow chart of one example method 200 for detecting an accelerometer sensor failure is depicted. As depicted, dip angle and total gravity measurements are computed at 202 from the triaxial accelerometer and triaxial magnetometer measurements made while surveying/drilling. For example, the dip angle *Dip* and total gravity *G* may be computed as follows:

$$Dip = \mathrm{asin}\left(\frac{G_x B_x + G_T B_T \cos X}{G_{Tot} \cdot B_{Tot}}\right) \qquad (1)$$

$$G = \sqrt{G_x{}^2 + G_T{}^2} \tag{2}$$

where $G_i$ represent accelerometer measurements, $B_i$ represent magnetometer measurements,

$$G_T = \sqrt{G_y{}^2 + G_z{}^2}, \; B_T = \sqrt{B_y{}^2 + B_z{}^2}, \; G_{Tot} = \sqrt{G_x{}^2 + G_y{}^2 + G_z{}^2}, \; B_{Tot} = \sqrt{B_x{}^2 + B_y{}^2 + B_z{}^2}$$

, and angle X represents an angle between the gravity and magnetic field vectors in the y-z plane such that:

$$\cos X = \frac{B_y \cdot G_y + B_z \cdot G_z}{B_T \cdot G_T} \; .$$

A dip angle error $Dip_{error}$ and a total gravity error $G_{error}$ may be obtained by computing absolute values of differences between at least one of the computed dip angle and the total gravity and the corresponding reference values. An accelerometer sensor error is indicated when one or both of the error signals ($Dip_{error}$ and/or $G_{error}$) exceed a corresponding threshold at 204, for example as given below in Eqs. (3) and (4).

$$\left(Dip_{error} = \left| Dip - Dip_{ref} \right| \right) > Dip_{Threshold} \tag{3}$$

$$\left(G_{error} = \left| G - G_{ref} \right| \right) > G_{Threshold} \tag{4}$$

Nonlimiting, example threshold values are given in FIG. 5 at 204. When both of the error signals ($Dip_{error}$ and/or $G_{error}$) are less than the corresponding thresholds, the sensors are taken to be fully operational and no correction is applied to the survey measurements.

Upon detecting an accelerometer sensor failure at 204, the method 200 next determines which accelerometer has failed (i.e., identifies the failed accelerometer). The x-axis accelerometer is evaluated at 206. The y-axis accelerometer is evaluated at 208. And the z axis accelerometer is evaluated at 210. In example embodiments, each of the accelerometer measurements in the triaxial set of measurements may be back-calculating from the other two accelerometer measurements in the triaxial set and a total gravity reference. For example, the back-calculated accelerometer measurements for the x-, y-, and z-axis accelerometers $G_x^1, G_y^1, G_z^1$ may be computed as follows:

$$G_x^1 = \sqrt{G_{ref}{}^2 - G_T{}^2} \tag{5}$$

$$G_y^1 = \sqrt{G_{ref}{}^2 - G_x{}^2 - G_z{}^2} \tag{6}$$

$$G_z^1 = \sqrt{G_{ref}{}^2 - G_x{}^2 - G_y{}^2} \tag{7}$$

Dip angle errors $Dip_1^{error}, Dip_2^{error}, Dip_3^{error}$ may then computed using the back-calculated x-axis, y-axis, or z-axis accelerometer measurements, for example, as follows:

$$Dip_1^{error} = \operatorname{asin}\left( \frac{G_x^1 B_x + G_T B_T \cos X}{G_{ref} \cdot B_{ref}} \right) - DIP_{ref} \tag{8}$$

$$Dip_2^{error} = \operatorname{asin}\left( \frac{G_x B_x + G_T^{1y} B_T \cos X^{1y}}{G_{ref} \cdot B_{ref}} \right) - DIP_{ref} \tag{9}$$

$$Dip_3^{error} = asin\left(\frac{G_x B_x + G_T^{1z} B_T \cos X^{1z}}{G_{ref} \cdot B_{ref}}\right) - DIP_{ref} \qquad (10)$$

where $DIP_{ref}$ represents the reference dip angle (e.g., in the local oilfield in which the survey measurements are being made), and $G_T^{1y}$, $G_T^{1z}$, $\cos X^{1y}$, and $\cos X^{1z}$ are given as follows:

$$G_T^{1y} = \sqrt{\left(G_y^1\right)^2 + G_z^{\,2}}$$

$$G_T^{1z} = \sqrt{G_y^{\,2} + (G_z^1)^2}$$

$$\cos X^{1y} = \frac{B_y \cdot G_y^1 + B_z \cdot G_z}{B_T \cdot G_T^{1y}}$$

$$\cos X^{1z} = \frac{B_y \cdot G_y + B_z \cdot G_z^1}{B_T \cdot G_T^{1z}}$$

A failed sensor may then be identified from $Dip_1^{error}$, $Dip_2^{error}$, $Dip_3^{error}$, for example, as follows:

$$[i, axis] = min(Dip_1^{error}, Dip_2^{error}, Dip_3^{error}) \qquad (11)$$

The dip error having the smallest error corresponds to the failed sensor (i.e., the minimum dip error identifies the failed accelerometer). For example, Eq. (11) indicates an x-axis accelerometer failure when $Dip_1^{error}$ is the smallest of the three, a y-axis accelerometer failure when $Dip_2^{error}$ is the smallest of the three, and a z-axis accelerometer failure when $Dip_3^{error}$ is the smallest of the three at 212.

With reference again to FIGS. 3 and 4, the failure detection algorithm may also be configured to detect temperature sensor failures. It will be appreciated that downhole surveying tool deployments commonly include multiple analog temperature sensors. Notwithstanding temperature gradients within the tool, given their relatively close proximity to one another, these multiple temperature sensors should, in principle, measure similar temperatures (e.g., within a few degrees). Therefore, in example embodiments, a temperature sensor failure may be indicated when the difference between a temperature sensor measurement and an average (or weighted average) output of selected ones of the other temperature sensors exceeds a threshold. Thus, for example, failure of a first temperature sensor may be indicated when the difference between the output of the first temperature sensor and an average output of other relevant temperature sensors (e.g., the average output of the second, third, fourth, and fifth temperature sensors) exceeds a threshold such as 5 degrees, 10 degrees, or 15 degrees C. This may be expressed mathematically, for example, as follows:

$$\left|T_i - Ave\left(T_j, T_k, T_l \ldots\right)\right| > \text{Threshold} \qquad (11)$$

It will be appreciated that accelerometer failure detection may be enhanced by correlating the sensor failure hypothesis with corresponding accelerometer temperature sensor measurements. For example, failure of an x-axis accelerometer temperature sensor may further confirm an x-axis accelerometer failure. Likewise, y-axis or z-axis accelerometer temperature sensor failures may further confirm corresponding y-axis or z-axis accelerometer failures.

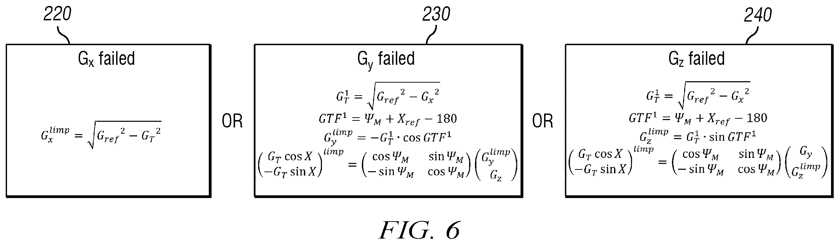

FIG. 6 depicts example sensor correction blocks for x-, y-, and z-axis accelerometer correction in which the x-axis accelerometer correction is indicated at 220, the y-axis accelerometer correction is indicated at 230, and the z-axis accelerometer correction is indicated at 240. At 220, the x-axis accelerometer measurements may be corrected (computed from the y-and z-axis accelerometer measurements) when an x-axis accelerometer failure is indicated. The x-axis accelerometer correction $G_x^{limp}$ may be given, for example, as follows:

$$G_x^{limp} = \sqrt{G_{ref}^2 - G_T^2} \qquad (12)$$

where $G_{ref}$ and $G_T$ are as defined above. Note that in Eq. (12), the corrected axial accelerometer measurement $G_x^{limp}$ may be computed from a reference total gravity $G_{ref}$ and cross axial ones of the triaxial accelerometer measurements $G_T = \sqrt{G_y^2 + G_z^2}$ .

At 230, the y-axis accelerometer measurements may be corrected (e.g., computed from the x-axis accelerometer measurements and the y- and z-axis magnetometer measurements) when a y-axis accelerometer failure is indicated. The y-axis accelerometer correction $G_y^{limp}$ may be given, for example, as follows:

$$G_y^{limp} = -G_T^1 \cdot \cos GTF^1 \qquad (13)$$

where:

$$G_T^1 = \sqrt{G_{ref}^2 - G_x^2}$$

$$GTF^1 = \Psi_M + X_{ref} - 180$$

and $\Psi_M$ represents the relative position of the y-axis with respect to the transversal magnetic field (which may be computed from cross-axial ones of the triaxial magnetometer measurements) and $X_{ref}$ represents a previous (e.g., the most recent) angle $X$ value between the gravity and magnetic field vectors in the cross-axial plane (e.g., the y-z plane using the instant coordinate convention).

At 240, the z-axis accelerometer measurements may be corrected (e.g., computed from the x-axis accelerometer measurements and the y- and z-axis magnetometer measurements) when a z-axis accelerometer failure is indicated. The z-axis accelerometer correction $G_z^{limp}$ may be given, for example, as follows:

$$G_z^{limp} = G_T^1 \cdot \sin GTF^1 \qquad (14)$$

where $G_T^1$ , $GTF^1$, and $\Psi_M$ are as defined above. Note that in Eqs. (13) and (14), the corrected cross axial accelerometer measurements $G_y^{limp}$ and $G_z^{limp}$ may be computed from a reference total gravity, an axial one of the triaxial accelerometer measurements, cross-axial ones of the triaxial magnetometer measurements (which are used to compute $\Psi_M$), and a previously measured angle X value between the gravity and magnetic field vectors in the cross-axial plane.

It will be appreciated that certain DDS variables (dynamic surveying variables) may be computed using the corrected y-axis or z-axis accelerometer measurements. Such DDS variables may include, for example a product of the transverse gravitational field $G_T$ and the cosine or sine of the angle X. For example, when the y-axis accelerometer measurements are corrected:

$$\begin{pmatrix} G_T \cos X \\ -G_T \sin X \end{pmatrix}^{limp} = \begin{pmatrix} \cos \Psi_M & \sin \Psi_M \\ -\sin \Psi_M & \cos \Psi_M \end{pmatrix} \begin{pmatrix} G_y^{limp} \\ G_z \end{pmatrix}$$

Likewise, when the z-axis accelerometer measurements are corrected:

$$\begin{pmatrix} G_T \cos X \\ -G_T \sin X \end{pmatrix}^{limp} = \begin{pmatrix} \cos \Psi_M & \sin \Psi_M \\ -\sin \Psi_M & \cos \Psi_M \end{pmatrix} \begin{pmatrix} G_y \\ G_z^{limp} \end{pmatrix}$$

These dynamic surveying variables may be utilized to compute various wellbore surveying parameters, for example, as described in commonly assigned U.S. Patent 11,692,432.

With reference again to FIGS. 3 and 4, a detected temperature sensor failure may be corrected, for example, by computing an average or weighted average of selected other (healthy) temperature sensors. This may be expressed mathematically, for example, as follows:

$$T_{corrected} = \frac{\sum_{i=1}^{n} T_i}{n} \qquad (19)$$

It will be appreciated that the methods described herein may be configured for implementation via one or more controllers deployed downhole (e.g., in the MWD tool or RSS tool). A suitable controller may include, for example, a programmable processor, such as a digital signal processor or other microprocessor or microcontroller and processor-readable or computer-readable program code embodying logic. A suitable processor may be utilized, for example, to execute the method embodiments (or various steps in the method embodiments) described above with respect to FIGS. 3-6 and the accompanying equations. A suitable controller may also optionally include other controllable components, such as other sensors, data storage devices, power supplies, timers, and the like. The controller may also be disposed to be in electronic communication with the accelerometers and magnetometers. A suitable controller may also optionally communicate with other instruments in the drill string, such as, for example, telemetry systems that communicate with the surface. A suitable controller may further optionally include volatile or non-volatile memory or a data storage device.

As described above, the disclosed methods may be implemented automatically. For example, the sensor failure detection method may run automatically in the background, with the corresponding sensor correction being automatically implemented only when a sensor failure is detected. The disclosed embodiments may further include an automated system or tool (such as an MWD tool or an RSS tool) configured for making wellbore surveying measurements and for automatically detecting and correcting sensor failures as described above. The system may include computer hardware and software configured to execute the automatic detection and correction routines. The hardware may include one or more processors (e.g., microprocessors) which may be connected to one data storage devices (e.g., hard drives or solid state memory) and user interfaces. The software may include processor executable instructions stored in the data storage device and or in firmware. The disclosed embodiments are, of course, not limited to the use of or the configuration of any particular computer hardware and/or software.

Although downhole health monitoring of survey sensors has been described in detail, it should be understood that various changes, substitutions and alternations can be made herein without departing from the spirit and scope of the disclosure as defined by the appended claims.

**Claims**

1.  A method for surveying a wellbore comprises:

    rotating a wellbore surveying tool in a wellbore, the wellbore surveying tool including a plurality of magnetometers, a plurality of accelerometers, and a plurality of temperature sensors;
    making magnetometer measurements, accelerometer measurements, and temperature measurements while the survey tool rotates in the wellbore;
    automatically detecting a failed sensor from the accelerometer measurements or the temperature measurements, wherein the failed sensor comprises at least one of the plurality of accelerometers and the plurality of temperature sensors;
    computing corrected sensor measurements for the failed sensor from selected ones of the magnetometer measurements, the accelerometer measurements, and the temperature measurements; and
    computing at least one of a wellbore inclination or a wellbore azimuth using the corrected sensor measurements.

2.  The method of claim 1, wherein:

    the failed sensor is at least one of the plurality of temperature sensors; and
    the automatically detecting the failed sensor comprises (i) computing differences between a temperature output of selected ones of the plurality of temperature sensors and an average of selected other ones of the plurality of temperature sensors and (ii) detecting a failed temperature sensor when an absolute value of one of the differences exceeds a threshold, wherein the corrected sensor measurement is preferably equal to an average output of the selected other ones of the plurality of temperature sensors.

3. The method of any one of the preceding claims, wherein the magnetometer measurements comprise triaxial magnetometer measurements and the accelerometer measurements comprise triaxial accelerometer measurements, wherein the corrected sensor measurement preferably comprises a corrected axial accelerometer measurement that is computed from a reference total gravity and cross axial ones of the triaxial accelerometer measurements.

4. The method of claim 3, wherein:

the triaxial accelerometer measurements are made using a triaxial accelerometer set including first, second, and third triaxial accelerometers;
the triaxial magnetometer measurements are made using a triaxial magnetometer set including first, second, and third triaxial magnetometers; and
the plurality of temperature sensors comprise at least first, second, and third temperature sensors configured to measure a temperature of each of the corresponding first, second, and third triaxial accelerometers, a fourth temperature sensor configured to measure a temperature of the triaxial magnetometers, and a fifth temperature sensor configured to measure a temperature of an analog-to-digital controller, and/or
wherein the automatically detecting a failed sensor further comprises:

automatically detecting a failed accelerometer; and
automatically identifying the failed accelerometer from among the plurality of accelerometers.

5. The method of claim 4, wherein the automatically detecting the failed accelerometer further comprises:

computing a dip angle or a total gravity from the triaxial magnetometer measurements or the triaxial accelerometer measurements;
computing a first difference between the dip angle and a reference dip angle or a second difference between the total gravity and a reference total gravity; and
detecting the failed accelerometer when the first difference or the second difference exceeds a corresponding threshold and/or
wherein the automatically identifying the failed accelerometer further comprises:

computing back-calculated x-axis, y-axis, and z-axis accelerometer measurements;
computing first, second, and third dip angles using the corresponding back-calculated x-axis, y-axis, and z-axis accelerometer measurements; and
selecting a minimum dip angle from among the first, second, and third dip angles to identify the failed accelerometer.

6. The method of claim 3, 4 or 5, wherein the corrected sensor measurement comprises a corrected cross axial accelerometer measurement that is computed from a reference total gravity, an axial one of the triaxial accelerometer measurements, cross-axial ones of the triaxial magnetometer measurements, and a previously measured angle X value between gravity and magnetic field vectors in a cross-axial plane.

7. A downhole tool comprising

a downhole tool body configured to rotate with a drill string;
a triaxial accelerometer set, a triaxial magnetometer set, and a plurality of temperature sensors deployed in the tool body; and
a processor configured to (i) cause the triaxial accelerometer set, the triaxial magnetometer set, and the plurality of temperatures sensors to make corresponding measurements while the downhole tool rotates in a wellbore (ii) automatically detect a failed accelerometer or a failed temperature sensor from the accelerometer measurements or the temperature sensor measurements, (iii) compute corrected accelerometer or corrected temperature measurements when a failed accelerometer or a failed temperature sensor is detected, and (iv) compute at least one of a wellbore inclination or a wellbore azimuth using the corrected accelerometer or corrected temperature sensor measurements.

8. The downhole tool of claim 7, wherein:

the failed sensor is at least one of the plurality of temperature sensors;
the automatically detecting the failed temperature sensor comprises (i) computing differences between a temperature output of selected ones of the plurality of temperature sensors and an average of selected other ones of the plurality of temperature sensors and (ii) detecting the failed temperature sensor when an absolute value of one of the differences exceeds a threshold; and

the corrected sensor measurement is set equal to an average output of the selected other ones of the plurality of temperature sensors.

9. The downhole tool of claim 7 or 8, wherein the automatically detecting the failed accelerometer further comprises:

computing a dip angle or a total gravity from the triaxial magnetometer measurements or the triaxial accelerometer measurements;

computing a first difference between the dip angle and a reference dip angle or a second difference between the total gravity and a reference total gravity;

detecting a failed accelerometer when the first difference or the second difference exceeds a corresponding threshold;

computing back-calculated x-axis, y-axis, and z-axis accelerometer measurements;

computing first, second, and third dip angles using the corresponding back-calculated x-axis, y-axis, and z-axis accelerometer measurements; and

selecting a minimum dip angle from among the first, second, and third dip angles to identify the failed accelerometer.

10. The downhole tool of any one of the claim 7 - 9, wherein the corrected accelerometer measurement comprises a corrected axial accelerometer measurement that is computed from a reference total gravity and cross axial ones of the triaxial accelerometer measurements.

11. The downhole tool of any one of the claims 7 - 10, wherein the corrected sensor measurement comprises a corrected cross axial accelerometer measurement that is computed from a reference total gravity, an axial one of the triaxial accelerometer measurements, the other cross axial accelerometer measurement, and the triaxial magnetometer measurements.

12. A method for surveying a wellbore comprises:

rotating a drill string in a wellbore to drill, the drill string including a triaxial accelerometer set, and a triaxial magnetometer set deployed in a tool body that rotates with the drill string;

using the triaxial accelerometer set and the triaxial magnetometer set to make corresponding triaxial accelerometer measurements and triaxial magnetometer measurements while rotating;

automatically detecting a failed accelerometer in the triaxial accelerometer set while making the triaxial accelerometer measurements and the triaxial magnetometer measurements;

computing corrected accelerometer measurements for the failed accelerometer from selected ones of the triaxial accelerometer measurements and the triaxial magnetometer measurements; and

computing at least one of a wellbore inclination or a wellbore azimuth using the corrected sensor measurements.

13. The method of claim 12, wherein the automatically detecting the failed accelerometer further comprises:

computing a dip angle or a total gravity from the triaxial magnetometer measurements or the triaxial accelerometer measurements;

computing a first difference between the dip angle and a reference dip angle or a second difference between the total gravity and a reference total gravity; and

detecting the failed accelerometer when the first difference or the second difference exceeds a corresponding threshold.

14. The method of claim 13, wherein the automatically detecting the failed accelerometer further comprises:

computing back-calculated x-axis, y-axis, and z-axis accelerometer measurements;

computing first, second, and third dip angles using the corresponding back-calculated x-axis, y-axis, and z-axis accelerometer measurements; and

selecting a minimum dip angle from among the first, second, and third dip angles to identify the failed accelerometer.

15. The method of any one of the claims 12 - 14, wherein the corrected accelerometer measurements comprise corrected axial accelerometer measurements that are computed from a reference total gravity and cross axial ones of the triaxial accelerometer measurements and/or wherein the corrected accelerometer measurements comprise corrected cross axial accelerometer measurements that are computed from a reference total gravity, axial one s of the triaxial accelerometer measurements, cross-axial ones of the triaxial magnetometer measurements, and a previously measured angle X value between gravity and magnetic field vectors in a cross-axial plane.

*FIG. 1*

*FIG. 2*

*FIG. 3*

*FIG. 4*

Sensor Measurements
in DDS Frame

$$Dip^{DDS} = \operatorname{asin}\left(\frac{G_x B_x + G_T B_T \cos X}{G_{Tot} \cdot B_{Tot}}\right)$$
$$G^{DDS} = \sqrt{G_x^2 + G_T^2}$$

202

No — All sensors are fine

$$Dip_{error} > Dip_{TH}$$
$$G_{error} > G_{TH}$$

Yes

204

206

**Hypothesis: $G_x$ failed**

$$G_x^1 = \sqrt{G_{ref}^2 - G_T^2}$$
$$Dip_1^{error} = \operatorname{asin}\left(\frac{G_x^1 B_x + G_T B_T \cos X}{G_{ref} \cdot B_{ref}}\right) - DIP_{ref}$$

208

**Hypothesis: $G_y$ failed**

$$G_y^1 = \sqrt{G_{ref}^2 - G_x^2 - G_z^2}$$
$$Dip_2^{error} = \operatorname{asin}\left(\frac{G_x B_x + G_T^{1y} B_T \cos X^{1y}}{G_{ref} \cdot B_{ref}}\right) - DIP_{ref}$$
$$G_T^{1y} = \sqrt{(G_y^1)^2 + G_z^2}$$
$$\cos X^{1y} = \frac{B_y \cdot G_y^1 + B_z \cdot G_z}{B_T \cdot G_T^{1y}}$$

210

**Hypothesis: $G_z$ failed**

$$G_z^1 = \sqrt{G_{ref}^2 - G_x^2 - G_y^2}$$
$$Dip_3^{error} = \operatorname{asin}\left(\frac{G_x B_x + G_T^{1z} B_T \cos X^{1z}}{G_{ref} \cdot B_{ref}}\right) - DIP_{ref}$$
$$G_T^{1z} = \sqrt{G_y^2 + (G_z^1)^2}$$
$$\cos X^{1z} = \frac{B_y \cdot G_y + B_z \cdot G_z^1}{B_T \cdot G_T^{1z}}$$

$$[i, axis] = \min(Dip_1^{error}, Dip_2^{error}, Dip_3^{error})$$

212

Conclusion: Sensor $G_i$ has failed

*FIG. 5*

200

EP 4 717 876 A1

220

**G_x failed**

$$G_x^{limp} = \sqrt{G_{ref}^2 - G_T^2}$$

OR

230

**G_y failed**

$$G_T^1 = \sqrt{G_{ref}^2 - G_x^2}$$

$$GTF^1 = \Psi_M + X_{ref} - 180$$

$$G_y^{limp} = -G_T^1 \cdot \cos GTF^1$$

$$\begin{pmatrix} G_T \cos X \\ -G_T \sin X \end{pmatrix}^{limp} = \begin{pmatrix} \cos \Psi_M & \sin \Psi_M \\ -\sin \Psi_M & \cos \Psi_M \end{pmatrix} \begin{pmatrix} G_y^{limp} \\ G_z \end{pmatrix}$$

OR

240

**G_z failed**

$$G_T^1 = \sqrt{G_{ref}^2 - G_x^2}$$

$$GTF^1 = \Psi_M + X_{ref} - 180$$

$$G_z^{limp} = G_T^1 \cdot \sin GTF^1$$

$$\begin{pmatrix} G_T \cos X \\ -G_T \sin X \end{pmatrix}^{limp} = \begin{pmatrix} \cos \Psi_M & \sin \Psi_M \\ -\sin \Psi_M & \cos \Psi_M \end{pmatrix} \begin{pmatrix} G_y \\ G_z^{limp} \end{pmatrix}$$

*FIG. 6*

# EUROPEAN SEARCH REPORT

**Application Number**

EP 25 20 4494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/119880 A1 (ISODRILL LLC [US]) 13 July 2017 (2017-07-13) | 12,15 | INV. E21B47/022 |
| A | * paragraphs [0021], [0070] - [0075]; figures 1-2C, 8A-C * | 1-11,13, 14 | |
| | ----- | | |
| A | CN 116 122 792 B (CHINA PETROLEUM & CHEM CORP) 5 December 2023 (2023-12-05) * paragraphs [0019] - [0028]; figures 1-3 * | 1-15 | |
| | ----- | | |

**TECHNICAL FIELDS SEARCHED (IPC)**

E21B

The present search report has been drawn up for all claims

| Place of search | Date of completion of the search | Examiner |
|---|---|---|
| The Hague | 27 January 2026 | Brassart, P |

## ANNEX TO THE EUROPEAN SEARCH REPORT
## ON EUROPEAN PATENT APPLICATION NO.

EP 25 20 4494

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | | Publication date | Patent family member(s) | | Publication date |
|---|---|---|---|---|---|
| WO 2017119880 | A1 | 13-07-2017 | AU | 2016384580 A1 | 05-07-2018 |
| | | | BR | 112018013845 A2 | 18-12-2018 |
| | | | CA | 3009147 A1 | 13-07-2017 |
| | | | CN | 108431360 A | 21-08-2018 |
| | | | CO | 2018007066 A2 | 19-07-2018 |
| | | | EA | 201891369 A1 | 30-11-2018 |
| | | | EP | 3400358 A1 | 14-11-2018 |
| | | | SA | 518391955 B1 | 09-11-2022 |
| | | | WO | 2017119880 A1 | 13-07-2017 |
| CN 116122792 | B | 05-12-2023 | CN | 116122792 A | 16-05-2023 |
| | | | US | 11519264 B1 | 06-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63699199
- US 11692432 B
- US 12123297 B